# EUROPÄISCHE PATENTSCHRIFT

(11) **EP 2 630 062 B1**
(45) Veröffentlichungstag und Bekanntmachung des Hinweises auf die Patenterteilung: **10.09.2014**
(21) Anmeldenummer: 11805381.8
(22) Anmeldetag: 20.10.2011
(51) Int. Cl.: B65G 11/20

(54) **SCHWERKRAFTRUTSCHE**
GRAVITY SLIDE
GLISSOIR À GRAVITÉ

(30) Priorität: 22.10.2010 DE 102010049281
(43) Veröffentlichungstag der Anmeldung: 28.08.2013
(73) Patentinhaber: BEUMER GmbH & Co. KG, 59269 Beckum (DE)
(72) Erfinder: HEITPLATZ, Heino, 48317 Drensteinfurt (DE)
(74) Vertreter: Philipp, Matthias
(86) Internationale Anmeldenummer: PCT/DE2011/001874
(87) Internationale Veröffentlichungsnummer: WO 2012/052005

(56) Entgegenhaltungen:
- WO-A1-98/55379
- SU-A1- 1 489 855
- US-A- 4 726 456

## Beschreibung

Die Erfindung betrifft eine Schwerkraftrutsche für Gegenstände nach dem Oberbegriff des Anspruchs 1, insbesondere an einem Abgabeende eines Sortierförderers, mit einem eine Förderfläche festlegenden Rutschenboden, wobei die Förderfläche einen in einer Förderrichtung weisenden Förderneigungswinkel aufweist, und mit mindestens einer den Rutschenboden seitlich begrenzenden Seitenwand. Derartige Schwerkraftrutschen werden insbesondere in Sortieranlagen zur Stückgutsortierung als Endstellen zur Aufnahme und Speicherung der sortierten Stückgüter eingesetzt und bestehen im Wesentlichen aus einem ebenen, unter einem Förderneigungswinkel bezüglich der Horizontalen und insbesondere quer zur Längsachse des Sortierförderers angeordneten Rutschenboden sowie zwei seitlich und senkrecht zum Rutschenboden angeordneten Seitenwänden. Wird die Endstelle auch zur Speicherung der Stückgüter genutzt, muss die Neigung des Rutschenbodens bzw. der Förderfläche hinreichend groß gewählt werden, damit die Stückgüter bei Bedarf aus der Ruhe gegen die Haftreibung anlaufen. Dies gilt insbesondere auch dann, wenn der Rutschenboden durch Trennklappen unterbrochen ist.

In der Praxis besteht häufig die Anforderung, Fördergüter mit unterschiedlicher Beschaffenheit und insbesondere unterschiedlichen Oberflächeneigenschaften und Reibcharakteristiken in der gleichen Endstelle zu fördern. Dies ist beispielsweise dann der Fall, wenn Kartons, etwa Schuhkartons, und in Kunststoffbeuteln verpackte Gegenstände wie Textilien in einer gemeinsamen Endstelle sortiert werden sollen. Der Neigungswinkel der Rutsche ist dann so zu wählen, dass das Fördergut mit dem höchsten Reibbeiwert, der sich als Reibpaarung der Fördergutoberflaäche mit der Rutschenoberfläche ergibt, im vorgenannten Beispiel die Kunststoffbeutel, sicher aus der Ruhe wieder anläuft. Dies hat zur Folge, dass der Neigungswinkel für solche Artikel, bei denen sich ein niedrigerer Reibbeiwert ergibt (beispielsweise Kartons), zu groß ist, was dazu führt, dass diese Artikel beim Herunterrutschen zu stark beschleunigt werden und beim Aufprall auf einen Endanschlag, Trennklappen oder andere Artikel eine hohe Aufprallgeschwindigkeit und damit eine hohe Aufprallenergie aufweisen, was zu unerwünschten Beschädigungen an den Sortiergütern führen kann.

Bisher wurde dieses Problem durch aktive Elemente wie beispielsweise Bremsbänder (Gurtförderer), veränderbare Neigungen, Bremsklappen oder aktive Bremsleisten im Rutschenboden gelöst, die jedoch zu erheblichen Mehrkosten führen.

Aus der US 4,726,456 A ist eine spiralförmige bzw. wendelförmige Schwerkraftrutsche nach dem Oberbegriff des Anspruchs 1 bekannt, bei der ein Teilbereich der Rutschenoberfläche einschließlich eines Teils einer vertikalen Seitenwand geringfügig ausgespart und anschließend mit einem abrasiven körnigen Material beschichtet ist, um einen Bereich verstärkter Reibung zu bilden. Der Rutschenboden steigt in radialer Richtung zur Seitenwand hin an.

Die Aufgabe der Erfindung besteht darin, eine gattungsgemäße Schwerkraftrutsche dahingehend zu verbessern, dass eine gutschonende und kostengünstige Beförderung für Stückgüter mit unterschiedlichen Oberflächeneigenschaften und somit unterschiedlichen Reibbeiwerten bei Reibpaarung mit der Rutsche gewährleistet werden kann.

Diese Aufgabe wird durch eine Schwerkraftrutsche nach Anspruch 1 gelöst.

Die Förderfläche ist die Oberfläche des Rutschenbodens oder deren wirksamer Anteil, der mit einem geförderten Gegenstand in Berührung kommt und mit seinen Reibeigenschaften das Verhalten des Gegenstands, bestimmt. Die Förderfläche kann bei einem ebenen Rutschenboden dessen ebene Oberfläche sein. Alternativ kann die Förderfläche bei einem im Querschnitt profilierten Rutschenboden durch eine Oberfläche von in Förderrichtung des Rutschenbodens verlaufenden Profilierungen, Erhebungen, Rippen oder Leisten gebildet sein, auf denen die zu befördernden Gegenstände aufliegen.

Es kann vorgesehen sein, dass die Seitenwand, zu der die Förderfläche quergeneigt verläuft, Reibeigenschaften aufweist, die sich von Reibeigenschaften der Förderfläche unterscheiden und insbesondere in Reibpaarung mit zu befördernden Gegenständen einen Gleitreibwert bilden, der sich von einem in Reibpaarung mit dem Rutschenboden gebildeten Gleitreibwert unterscheidet und insbesondere größer als dieser ist, jedenfalls dann, wenn der jeweilige Gegenstand an seinen Oberflächen, an denen er die Seitenfläche und den Rutschenboden berührt, einheitliche Reibeigenschaflen aufweist.

In einer Variante kann vorgesehen sein, dass die Seitenwand, zu der die Förderfläche quergeneigt verläuft, innerhalb eines sich von der Förderfläche bis zu einer ersten Höhe erstreckenden ersten Bereichs erste Reibeigenschaften aufweist, und innerhalb eines sich oberhalb der ersten Höhe erstreckenden zweiten Bereichs zweite Reibeigenschaften aufweist, die sich von den ersten Reibeigenschaften unterscheiden. Unterschiedliche Reibeigenschaften der beiden Bereiche bedeuten, dass bei einem Gegenstand, der mit dem ersten Bereich in Reibkontakt steht und eine Reibpaarung bildet, ein anderer Haft- und Gleitreibungswert bzw. -beiwert auftritt als im zweiten Bereich. Durch Anpassung der ersten Höhe an unterschiedliche mit der Schwerkraftrutsche beförderte Gegenstände können so unterschiedliche Reibkräfte und somit unterschiedliche Bremswirkungen auf unterschiedliche Gegenstände oder Kategorien von Gegenständen erzeugt werden, die sich insbesondere in ihrer Höhe unterscheiden.

Der erste Bereich kann in einer ersten Variante allmählich oder mehr oder weniger stufenlos gegenüber dem zweiten Bereich zurücktreten, insbesondere in Form einer bezüglich der Förderfläche nicht senkrechten, sondern unter einem Winkel von weniger als 90° geneigten Anordnung. In besonderen Fällen kann die Seitenwand im ersten Bereich unter einem ersten Winkel von weniger als 90° gegenüber der Förderfläche geneigt sein, und kann im zweiten Bereich unter einem zweiten Winkel, ebenfalls weniger als 90°, gegenüber der Förderfläche geneigt sein, wobei der ersten Winkel kleiner oder größer als der zweite Winkel sein kann.

Alternativ kann die Seitenwand im Querschnitt konvex oder konkav gekrümmt bezüglich der Förderfläche ausgebildet sein, wodurch sich ein mit abnehmender Höhe der Seitenwand über der Förderfläche ein schnelleres (progressives) oder langsameres (degressives) Zurücktreten des ersten Bereichs ergibt.

In einer zweiten Variante kann vorgesehen sein, dass die Seitenwand innerhalb des ersten Bereichs als Ganzes stufenförmig zurückspringend gegenüber dem zweiten Bereich ausgebildet ist, insbesondere um eine Stufenhöhe von mindestens 1 mm, 2 mm, 3 mm, 5 mm, 8 mm, 10 mm, 15 mm, 20 mm, 30 mm, 50 mm oder 100 mm.

Selbstverständlich können alle Varianten kombiniert werden, wobei etwa die Seitenwand im ersten oder zweiten Bereich senkrecht zu der Förderfläche verlaufen kann, oder auch unter einem Winkel von weniger als 90° dazu, und in dem anderen Bereich unter einem Winkel von weniger als 90° zur Förderfläche, während zusätzlich der erste Bereich als Ganzes stufenförmig zurückspringend gegenüber dem zweiten Bereich ausgebildet sein kann, wobei der erste und/oder der zweite Bereich zusätzlich im Querschnitt konkav oder konvex gekrümmt sein können.

Die Querneigung der Förderfläche kann zwischen 5° und 45°, insbesondere zwischen 10° und 30° betragen.

Die Förderfläche kann Reibeigenschaften aufweisen, die in Reibpaarung mit zu befördernden Gegenständen einen Gleitreibungswert im Bereich von 0,05 bis 1, insbesondere 0,1 bis 0,6 erzeugen, wobei die Förderfläche aus Metall mit oder ohne Beschichtung, Edelstahl, Kunststoff, Holz, Rollenleisten oder einer Rollenbahn bestehen kann.

Es kann vorgesehen sein, dass die Seitenwand innerhalb des ersten Bereichs zumindest an ihrer Oberfläche aus Metall, Kunststoff, Gurtmaterial, Holz, oder einer Rollenleisten besteht.

Weiterhin kann vorgesehen sein, dass die Seitenwand innerhalb des zweiten Bereichs zumindest an ihrer Oberfläche aus Metall, Kunststoff, Gurtmaterial, Holz, etwa PU oder PVC oder einer Rollenleiste besteht.

Zweckmäßigerweise ist vorgesehen, dass die Seitenwand und/oder der Rutschenboden eben sind, wobei sie senkrecht zueinander angeordnet sein können.

Es besteht die Möglichkeit, dass die Schwerkraftrutsche als Doppel- oder Mehrfachrutsche mit zwei oder mehr nebeneinander angeordneten Rutschenböden und Seitenwänden ausgebildet ist.

Die Erfindung bezieht sich ferner auf einen Sortierförderer mit einer Abgabestation, an der eine Schwerkraftrutsche nach der Erfindung angeordnet ist.

Die Erfindung wird unter Bezugnahme auf eine Zeichnung weiter erläutert, wobei
Fig. 1 eine erste Ausführungsform der Erfindung in einer schematischen perspektivischen Ansicht zeigt,
Fig. 2 den Förderneigungswinkel der Schwerkrafirutsche, die schräg oder quer zur Förderrichtung eines Sortierförderers angeordnet ist, erläutert,
Fig. 3 eine zweite Ausführungsform der Erfindung zeigt,
Fig. 4a, b eine dritte Ausführungsform der Erfindung zeigen, und
Fig. 5 bis 7 weitere Varianten der Erfindung erläutern.

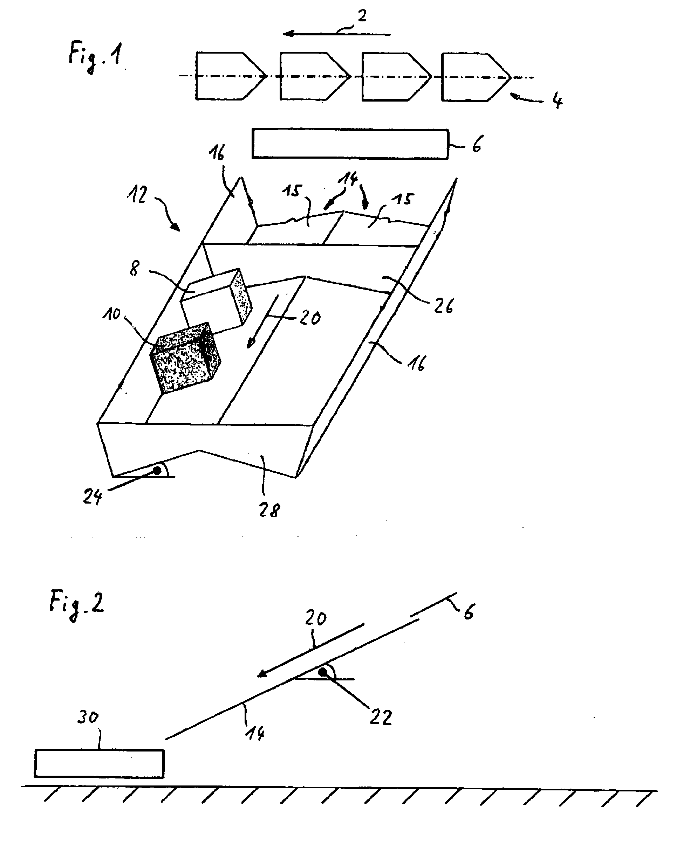

Wie Fig. 1 zeigt, besteht der Grundgedanke der Erfindung darin, im Unterschied zu einer herkömmlichen Schwerkraftrutsche, deren Rutschenboden in Förderrichtung geneigt, aber quer dazu horizontal ausgerichtet oder nicht geneigt ist, und dessen Seitenwände senkrecht sind, den Rutschenboden zusätzlich zu seiner Förderneigung mit einer Querneigung zu versehen. Fig. 1 zeigt schematisch einen in einer Sortierförderrichtung 2 bewegten Sortierförderer 4, der geförderte Gegenstände 8, 10 an einer Abgabestation 6 an eine Schwerkraftrutsche 12 übergibt. Die Schwerkraftrutsche 12 ist dachförmig doppelt ausgebildet und weist zwei spiegelbildlich angeordnete Rutschenböden 14 und an deren äußeren Längsrändern jeweils senkrecht dazu angeordnete Seitenwände 16 auf. Jeder Rutschenboden 14 legt eine Förderfläche 15 fest, die einen in Förderrichtung 20 weisenden Förderneigungswinkel 22 und einen quer zur Förderrichtung 20 weisenden Querneigungswinkel 24 (jeweils bezüglich einer Horizontalebene) aufweist.

Im Verlauf der Schwerkraftrutsche können eine oder mehrere Klappen 26 angeordnet sein, um von dem Sortierförderer 4 übernommene Gegenstände zeitweilig zurückzuhalten und gesteuert freizugeben. An einem unteren Ende der Schwerkraftrutsche kann ein Anschlag 28 vorgesehen sein, der Gegenstände gesteuert in einen Abnahmebereich 30 freigibt.

Bevorzugt wird für die Seitenwände ein Material mit gegenüber der Förderfläche unterschiedlichen Reibeigenschaften gewählt, so dass sich die Reibeigenschaften von Seitenwand und Förderfläche voneinander unterscheiden.

Insbesondere kann es günstig sein, wenn Materialien gewählt werden, mit denen sich ein höherer Gleitreibungswert zwischen Seitenwand und den zu fördernden Gegenständen als zwischen Rutschenboden und den Gegenständen ergibt. Dadurch stellt sich bei Gegenständen mit einem vergleichsweise hohen Gleitreibungswert zur Förderfläche eine vergleichsweise geringe Normalkraft zur Seitenwand ein, so dass die Gegenstände trotz des höheren Gleitreibungswerts an der Seitenwand vergleichsweise weniger stark verzögert werden. Dagegen erfahren Gegenstände mit einem vergleichsweise niedrigen Gleitreibungswert zur Förderfläche eine vergleichsweise hohe Normalkraft zur Seitenwand hin, wodurch sich der hohe Gleitreibungswert zwischen Gegenstand und Seitenwand vergleichsweise stärker verzögernd auswirkt.

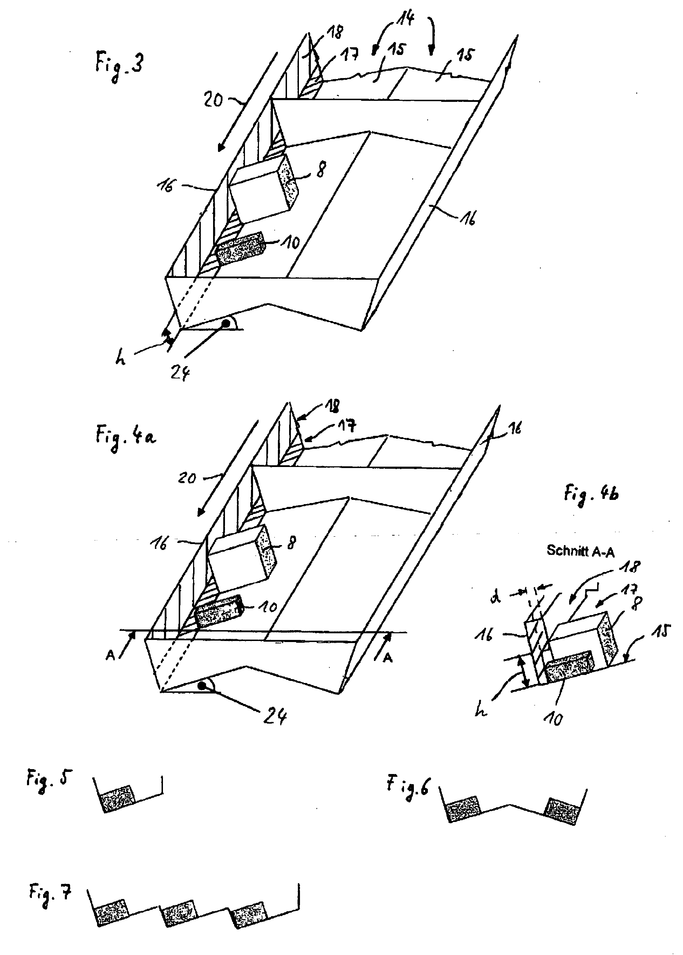

Fig. 3 zeigt eine Ausführungsform, die sich für solche Fälle eignet, in denen die geförderten Gegenstände unterschiedliche Höhen (entweder kleiner oder größer als ein Maß h) über der Förderfläche aufweisen und ein typischer Zusammenhang zwischen Höhe eines Gegenstands und Reibeigenschaften des Gegenstands besteht. Ein Beispiel sind niedrige Gegenstände in Form von Kunststoffbeuteln, beispielsweise aus Polyethylen, die eher flach sind und tendenziell zu höheren Reibwerten neigen, im Gegensatz zu Kartons, die regelmäßig eine größere Höhe aufweisen und zu kleineren Reibwerten neigen. Die maßlichen Unterschiede können genutzt werden, indem die Seitenwand in unterschiedlichen Höhen unterschiedliche Reibeigenschaften aufweist, beispielsweise Metall, Kunststoff, Gurt oder Rollenleiste.

In Fig. 3 kann die Seitenwand 16 innerhalb eines ersten Bereichs 17, der sich bis zu einer Höhe h erstreckt, gemessen senkrecht über der Förderfläche 15, erste Reibeigenschaften aufweisen und an ihrer Oberfläche aus einem Material bestehen, das in Reibpaarung mit den meisten Verpackungsmaterialien (z.B. Kunststofffolie, Karton) beispielsweise zu einem relativ kleinen Gleitreibungswert führt. In einem zweiten Bereich 18, der sich oberhalb der Höhe h erstreckt, kann die Seitenwand an ihrer Oberfläche aus einem Material bestehen, welches zweite Reibeigenschaften aufweist, die in Reibpaarung mit den meisten Verpackungsmaterialien zu einem relativ großen Gleitreibungswert führen. Dadurch kommen Gegenstände 8, bei denen in Reibpaarung mit einer herkömmlichen Schwerkraftrutsche ein relativ niedriger Gleitreibungswert besteht, in diesem Beispiel Kartons mit einer Höhe, die größer als die Höhe h ist, teilweise oder überwiegend in Kontakt mit einer Oberfläche, deren Reibeigenschaften zu einem relativ großen Gleitreibungswert führen, so dass diese Gegenstände stärker abgebremst werden als im Stand der Technik.

Umgekehrt kommen bei der Anwendung nach Fig. 3 solche Gegenstände 10, deren Höhe kleiner als die Höhe h ist und deren Material in Reibpaarung mit einer herkömmlichen Schwerkraftrutsche zu einem relativ großen Gleitreibungswert führt, in Kontakt mit einer Oberfläche mit den ersten Reibeigenschaften, die in Reibpaarung mit dem Gegenstand zu einem relativ kleinen Gleitreibungswert (kleiner als bei den zuvor genannten Gegenständen mit einer Höhe > h) führt, so dass diese Stückgüter, die im Stand der Technik relativ stark abgebremst werden, erfindungsgemäß weniger stark abgebremst werden.

Durch geeignete Wahl der Oberflächenqualitäten oder Reibeigenschaften der beiden Bereiche der Seitenwand kann so erreicht werden, dass Gegenstände trotz unterschiedlicher Verpackungsmaterialien eine ähnliche Rutsch- bzw. Fördergeschwindigkeit erreichen.

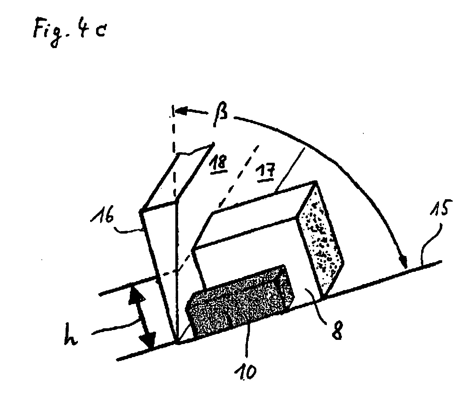

Die Ausführung nach Fig. 3 ist dann zweckmäßig, wenn flache Gegenstände mit hohen Gleitreibungswerten und hohe Gegenstände mit niedrigen Gleitreibungswerten korrelieren, jeweils bezogen auf Reibpaarung mit der Förderfläche. Wenn dies umgekehrt ist, müssen auch die Reibeigenschaften der Seitenwände umgekehrt angeordnet werden, was Fig. 4 zeigt. Die Seitenwand weist ausgehend von der Förderfläche in einem ersten Bereich 17 bis in eine erste Höhe h eine Oberfläche mit Reibeigenschaften auf, die in Reibpaarung mit Gegenständen 10, deren Höhe kleiner als die Höhe h ist, zu einem ersten Gleitreibungswert führt, der kleiner ist als ein zweiter Gleitreibungswert, der sich aus einer Reibpaarung von Gegenständen 8 ergibt, deren Höhe größer als die Höhe h ist und die in Kontakt mit einem zweiten Bereich 18 der Seitenwand stehen, der sich oberhalb der Höhe h erstreckt und zweite Reibeigenschaften aufweist, die sich von den ersten Reibeigenschaften unterscheiden und zu dem gewünschten höheren Gleitreibungswert führen.

Dadurch, dass der erste Bereich 17 der Seitenwand, der sich bis zur Höhe h erstreckt, gegenüber dem zweiten Bereich 18 zurückspringend angeordnet ist, kommen Gegenstände mit einer Höhe, die größer als die Höhe h ist, ausschließlich mit Material mit zweiten Reibeigenschaften in Reibkontakt, während umgekehrt flache Gegenstände mit einer Höhe, die kleiner als die Höhe h ist, ausschließlich mit Material mit ersten Reibeigenschaften in Reibkontakt kommen, wie in einer Schnittansicht gemäß Fig. 4b dargestellt ist.

Eine Alternative zu der stufenartig zurückspringenden Anordnung zeigt Fig. 4c, wobei ein Neigungswinkel β der Seitenwand 16 weniger als 90° relativ zur Förderfläche 15 beträgt und ein allmähliches Zurücktreten des ersten Bereichs 17 gegenüber dem zweiten Bereich 18 bewirkt.

Fig. 5 bis 7 zeigen schematisch unterschiedliche Anordnungsmöglichkeiten einer erfindungsgemäßen Schwerkraftrutsche, wobei Fig. 5 eine einfache Ausführung zeigt, Fig. 6 eine doppelte Ausführung in Dachform zeigt, entsprechend Fig. 2 bis 4, und Fig. 7 eine Mehrfachanordnung nebeneinander zeigt, wobei die einzelnen Rutschenböden und Seitenwände jeweils parallel zueinander sind.

### Bezugszeichenliste

- 2: Sortierförderrichtung
- 4: Sortierförderer
- 6: Abgabestation
- 8, 10: Gegenstand
- 12: Schwerkraftrutsche
- 14: Rutschenboden
- 15: Förderfläche
- 16: Seitenwand
- 17: erster Bereich
- 18: zweiter Bereich
- 20: Förderrichtung
- 22: Förderneigungswinkel
- 24: Querneigungswinkel
- 26: Klappe
- 28: Anschlag
- 30: Abnahmebereich

- h: Höhe

- *β*: Neigungswinkel (zwischen 16 und 15)

## Patentansprüche

1. Schwerkraftrutsche für Gegenstände, mit einem eine Förderfläche (15) festlegenden Rutschenboden (14), wobei die Förderfläche (15) einen in einer Förderrichtung (20) weisenden Förderneigungswinkel (22) aufweist, und mit mindestens einer den Rutschenboden (14) seitlich begrenzenden Seitenwand (16), wobei die Förderfläche (15) zusätzlich zu dem Förderneigungswinkel (22) einen quer zur Förderrichtung (20) gerichteten und zu einer Seitenwand (16) weisenden Querneigungswinkel (24) aufweist, unter dem sie zu der Seitenwand (16) hin abfallend angeordnet ist, **dadurch gekennzeichnet, dass** die Seitenwand (16), zu der die Förderfläche (15) quergeneigt verläuft, innerhalb eines sich von der Förderfläche (15) bis zu einer Höhe (h) erstreckenden ersten Bereichs (17) erste Reibeigenschaften aufweist, und innerhalb eines sich oberhalb der Höhe (h) erstreckenden zweiten Bereichs (18) zweite Reibeigenschaften aufweist, die sich von den ersten Reibeigenschaften unterscheiden, wobei die Seitenwand (16) innerhalb des ersten Bereichs (17) zurücktretend gegenüber dem zweiten Bereich (18) ausgebildet ist.

2. Schwerkraftrutsche nach Anspruch 1, **dadurch gekennzeichnet, dass** die Seitenwand (16) mit der Förderfläche (15) einen Winkel (β) von weniger als 90° einschließt.

3. Schwerkraftrutsche nach Anspruch 1 oder 2, **dadurch gekennzeichnet, dass** die Seitenwand innerhalb des ersten Bereichs (17) als Ganzes stufenförmig zurückspringend gegenüber dem zweiten Bereich (18) ausgebildet ist, insbesondere um eine Stufenhöhe (d) von mindestens 1 mm, 2 mm, 3 mm, 5 mm, 8 mm, 10 mm, 15 mm, 20 mm, 30 mm oder 50 mm.

4. Schwerkraftrutsche nach einem der vorangehenden Ansprüche, **dadurch gekennzeichnet, dass** der Querneigungswinkel (24) der Förderfläche (15) zwischen 5° und 45°, insbesondere zwischen 10° und 30° beträgt.

5. Schwerkraftrutsche nach einem der vorangehenden Ansprüche, **dadurch gekennzeichnet, dass** die Förderfläche (15) Reibeigenschaften aufweist, die in Reibpaarung mit zu befördernden Gegenständen (8, 10) einen Gleitreibwert im Bereich von 0,05 bis 1, insbesondere zwischen 0,1 und 0,6, erzeugen.

6. Schwerkraftrutsche nach einem der vorangehenden Ansprüche, **dadurch gekennzeichnet, dass** die Förderfläche (15) aus Metall mit oder ohne Beschichtung, Edelstahl, Kunststoff, Holz, Rollenleisten oder einer Rollenbahn besteht.

7. Schwerkraftrutsche nach einem der vorangehenden Ansprüche, **dadurch gekennzeichnet, dass** die Seitenwand (16) innerhalb des ersten Bereichs (17) an ihrer Oberfläche aus Metall, Kunststoff, Gurtmaterial, Holz, oder einer Rollenleiste besteht.

8. Schwerkraftrutsche nach einem der vorangehenden Ansprüche, **dadurch gekennzeichnet, dass** die Seitenwand (16) innerhalb des zweiten Bereichs (18) an ihrer Oberfläche aus Metall, Kunststoff, Gurtmaterial, Holz oder einer Rollenleiste besteht.

9. Schwerkraftrutsche nach einem der vorangehenden Ansprüche, **dadurch gekennzeichnet, dass** die Seitenwand (16) und/oder die Förderfläche (15) eben sind und senkrecht zueinander angeordnet sein können.

10. Schwerkraftrutsche nach einem der vorangehenden Ansprüche, **dadurch gekennzeichnet, dass** sie als Mehrfachrutsche mit mehreren nebeneinander angeordneten Rutschenböden und Seitenwänden ausgebildet ist.

11. Sortierförderer (4) mit einer Abgabestation (6), an der eine Schwerkraftrutsche (12) nach einem der vorangehenden Ansprüche angeordnet ist.

## Claims

1. Gravity chute for items, with a chute floor (14) that defines a conveying surface (15), wherein the conveying surface (15) has a conveying angle of inclination (22) pointing in a direction of transportation (20), and with at least one side wall (16) that laterally delimits the chute floor (14), wherein the conveying surface (15) has, in addition to the conveying angle of inclination (22), a transverse angle of inclination (24) directed transversely to the direction of transportation (20) and pointing towards a side wall (16), and this [conveying surface] is arranged to slope down towards the side wall (16)
**characterised in that**
the side wall (16) to which the conveying surface (15) runs at a transverse inclination, has, within a first area (17) extending from the conveying surface (15) up to a height (h), first frictional properties, and within a second area (18) extending above the height (h), it has second frictional properties which differ from the first frictional properties, wherein the side wall (16) is recessed within the first area (17) in relation to the second area (18).

2. Gravity chute according to claim 1, **characterised in that** with the conveying surface (15), the side wall (16) encloses an angle (ß) of less than 90°.

3. Gravity chute according to claim 1 or 2, **characterised in that** within the first area (17) as a whole, the side wall is designed to be recessed in relation to the second area (18), in particular by a step height (d) of at least 1 mm, 2 mm, 3 mm, 5 mm, 8 mm, 10 mm, 15 mm, 20 mm, 30 mm or 50 mm.

4. Gravity chute according to one of the preceding claims, **characterised in that** the transverse angle of inclination (24) of the conveying surface (15) is between 5° and 45°, in particular between 10° and 30°.

5. Gravity chute according to one of the preceding claims, **characterised in that** the conveying surface (15) has frictional properties which, in friction pairing with items (8, 10) that are to be transported, produce a coefficient of sliding friction in the range from 0.05 to 1, in particular between 0.1 and 0.6.

6. Gravity chute according to one of the preceding claims, **characterised in that** the conveying surface (15) consists of metal with or without a coating, stainless steel, plastic, wood, roller bars or a roller track.

7. Gravity chute according to one of the preceding claims, **characterised in that** on its surface, the side wall (16) within the first area (17) consists of metal, plastic, belt material, wood or a roller bar.

8. Gravity chute according to one of the preceding claims, **characterised in that** on its surface, the side wall (16) within the second area (18) consists of metal, plastic, belt material, wood or a roller bar.

9. Gravity chute according to one of the preceding claims, **characterised in that** the side wall (16) and/or the conveying surface (15) are flat and can be arranged perpendicular to one another.

10. Gravity chute according to one of the preceding claims, **characterised in that** it is designed as a multiple chute with a plurality of chute floors and side walls arranged next to one another.

11. Sorting conveyor (4) with a delivery station (6), arranged at which is a gravity chute (12) according to one of the preceding claims.

## Revendications

1. Glissoir à gravité pour objets, avec un tapis de glissoir (14) définissant une surface de transport (15), où la surface de transport (15) présente un angle d'inclinaison de transport (22) pointant dans un sens de transport (20) et avec au moins une paroi latérale (16) délimitant latéralement le tapis de glissoir (14), où la surface de transport (15) présente en plus de l'angle d'inclinaison de transport (22) un angle d'inclinaison transversal (24) perpendiculaire au sens de transport (20) et orienté vers une paroi latérale (16), [angle] selon lequel la surface de transport est inclinée pour s'abaisser vers la paroi latérale (16), **caractérisé en ce que** la paroi latérale (16), vers laquelle s'incline transversalement la surface de transport (15), présente de premières propriétés de frottement dans une première zone (17) s'étendant de la surface de transport (15) jusqu'à une hauteur (h), et présente de secondes propriétés de frottement, différentes des premières propriétés de frottement, dans une seconde zone (18) s'étendant au-dessus de la hauteur (h), où la paroi latérale (16) dans la première zone (17) est disposée en retrait par rapport à la seconde zone (18).

2. Glissoir à gravité selon la revendication 1, **caractérisé en ce que** la paroi latérale (16) forme avec la surface de transport (15) un angle (β) de moins de 90°.

3. Glissoir à gravité selon la revendication 1 ou 2, **caractérisé en ce que** la paroi latérale dans toute la première zone (17) est disposée progressivement en retrait par rapport à la seconde zone (18), notamment selon une hauteur de marche (d) d'au moins 1mm, 2mm, 3mm, 5mm, 8mm, 10mm, 15mm, 20mm, 30m ou 50mm.

4. Glissoir à gravité selon l'une des revendications précédentes, **caractérisé en ce que** l'angle d'inclinaison transversal (24) de la surface de transport (15) est situé entre 5° et 45°, en particulier entre 10° et 30°.

5. Glissoir à gravité selon l'une des revendications précédentes, **caractérisé en ce que** la surface de transport (15) présente des propriétés de frottement qui dans le cadre d'un appariement de frottement avec les objets à transporter (8, 10) produisent un coefficient de frottement de glissement situé dans une fourchette de 0,05 à 1, en particulier de 0,1 à 0,6.

6. Glissoir à gravité selon l'une des revendications précédentes, **caractérisé en ce que** la surface de transport (15) se compose de métal avec ou sans revêtement, acier inoxydable, plastique, bois, de tasseaux à rouleaux ou d'une table à rouleaux.

7. Glissoir à gravité selon l'une des revendications précédentes, **caractérisé en ce que** la paroi latérale (16) dans la première zone (17) est constituée en sa surface de métal, plastique, matériau de courroie, bois ou d'un tasseau à rouleaux.

8. Glissoir à gravité selon l'une des revendications précédentes, **caractérisé en ce que** la paroi latérale (16) dans la seconde zone (18) est constituée en sa surface de métal, plastique, matériau de courroie, bois ou d'un tasseau à rouleaux.

9. Glissoir à gravité selon l'une des revendications précédentes, **caractérisé en ce que** la paroi latérale (16) et/ou la surface de transport (15) sont planes et peuvent être disposées perpendiculairement l'une par rapport à l'autre.

10. Glissoir à gravité selon l'une des revendications précédentes, **caractérisé en ce qu'**il est construit comme glissoir multiple ayant plusieurs tapis de glissoir et parois latérales disposés de façon adjacente les uns par rapport aux autres.

11. Transporteur de tri (4) avec un poste de décharge (6) sur lequel est aménagé un glissoir à gravité (12) selon l'une des revendications précédentes.
